# EUROPÄISCHE PATENTSCHRIFT

(11) **EP 1 763 462 B1**
(45) Veröffentlichungstag und Bekanntmachung des Hinweises auf die Patenterteilung: **13.01.2010**
(21) Anmeldenummer: 05740169.7
(22) Anmeldetag: 25.04.2005
(51) Int. Cl.: B60T 7/04, B60T 7/10, B60T 13/74

(54) **ELEKTRONISCHE PARKBREMSE UND VERFAHREN ZUM STEUERN EINER ELEKTRONISCHEN PARKBREMSE**
ELECTRONIC PARKING BRAKE AND METHOD FOR CONTROLLING AN ELECTRONIC PARKING BRAKE
FREIN DE STATIONNEMENT ELECTRONIQUE ET PROCEDE DE COMMANDE D'UN FREIN DE CE TYPE

(30) Priorität: 07.07.2004 DE 102004032899
(43) Veröffentlichungstag der Anmeldung: 21.03.2007
(73) Patentinhaber: Continental Automotive GmbH, 30165 Hannover (DE)
(72) Erfinder: GOSS, Stefan, 93164 Brunn (DE); KALBECK, Alexander, 93133 Burglengenfeld (DE); SAUER, Armin, 97450 Arnstein (DE)
(86) Internationale Anmeldenummer: PCT/EP2005/051839
(87) Internationale Veröffentlichungsnummer: WO 2006/003042

(56) Entgegenhaltungen:
- WO-A-00/73114
- WO-A-2004/022394
- US-A1- 2003 036 838

## Beschreibung

Die Erfindung betrifft ein Verfahren zum Steuern einer elektronischen Parkbremse, bei dem beim Lösen der Parkbremse eine Kraftsteuerung und eine Positionssteuerung stattfinden.

Die Erfindung betrifft weiterhin eine elektronische Parkbremse, die durch eine Kraftsteuerung und eine Positionssteuerung lösbar ist.

Die US 2003/0036838 A1 beschreibt ein Verfahren zum Steuern des Lösens einer Parkbremse, in dem in einem ersten Schritt zunächst eine Kraftsteuerung durchgeführt wird. Sobald die Kraft einen Grenzwert erreicht, wird von der Kraftsteuerung in eine Positionssteuerung gewechselt. Dann wird zunächst die aktuelle Position erfasst, um daraus ein Streckenende einer zusätzlichen Lösestrecke zu berechnen. Die zusätzliche Lösestrecke stellt einen Sicherheitsabstand bereit, um eine Fehlertoleranz der Kraftmessung zu berücksichtigen.

Elektronische Feststellbremsanlagen, auch unter den Bezeichnungen elektronische, elektrische oder automatische Parkbremse bekannt, ersetzen zunehmend die rein mechanischen Handbremsen in Kraftfahrzeugen. Mit der Verwendung elektronischer Feststellbremsanlagen entfällt der meist relativ große im Fahrgastraum befindliche Bedienhebel, wodurch sich eine wesentlich größere Gestaltungsfreiheit des Fahrgastraums ergibt. Des Weiteren bietet eine derartige Anlage einen größeren Bedienkomfort, da einerseits der Bediener keine großen Kräfte aufwenden muss, um die Bremse festzustellen oder zu lösen, zum anderen können verschiedene Funktionen, wie etwa das Anfahren am Berg oder das Lösen der Bremse beim erstmaligen Anfahren nach dem Parken elektronisch und damit auch automatisch ausgeführt werden. Diese vorteilhaften Merkmale einer elektronischen Feststellbremsanlage müssen allerdings mit einer im Hinblick auf die rein mechanische Handbremse vergleichbaren oder verbesserten Sicherheit einhergehen.

Bei der Steuerung oder gegebenenfalls Regelung (hier wie auch im gesamten Dokument kann bzw. muss der Begriff Steuerung auch als Regelung verstanden werden) einer derartigen Parkbremse beispielsweise durch eine Elektromotor-GetriebeEinheit entsteht in der Regel eine Diskrepanz zwischen der Position des Getriebes und der an den Bremsen anliegenden Kraft. Dies ist auf die physikalischen Eigenschaften des Bremssystems und der Kraftübertragungsvorrichtung zurückzuführen und äußert sich unter anderem in Hystereseffekten. In diesem Zusammenhang soll der Begriff Kraftübertragungsvorrichtung sowohl den Aktuator, alle Teile, die Kräfte auf die Bremsen übertragen, als auch Bestandteile, an denen die Kraft des Aktuators wirkt, umfassen. Da so eine eindeutige Zuordnung zwischen der Getriebeposition und der Bremskraft nur schlecht realisierbar ist, erfolgt eine Steuerung in der Regel nicht alleine über die Getriebe- oder Motorposition. Alternativ kann eine Steuerung der elektronischen Feststellbremsanlage über eine Kraftmessung an der Kraftübertragungsvorrichtung erfolgen. Eine ausschließliche Steuerung oder Regelung über die an der Kraftübertragungsvorrichtung der Bremse anliegende Kraft scheidet jedoch aus sicherheitstechnischen Gründen aus, da Fehler an der Kraftübertragungsvorrichtung sowie die oben erwähnten Hystereseeffekte in Betracht gezogen werden müssen. Aus diesen Gründen wird bei elektronischen Feststellbremsanlagen in der Regel eine kombinierte Kraft-Weg-Steuerung eingesetzt.

Gemäß dem Stand der Technik gestaltet sich ein Zyklus "Parkbremse anziehen - Parkbremse lösen" wie folgt: Ausgehend von einer Startposition wird die Parkbremse zugespannt, bis eine vorgeschriebene Kraft erreicht wird. Dies muss innerhalb eines vorgegebenen Weges mit entsprechenden Toleranzen erreicht werden. Beim Lösen legt dann das System ausgehend von der Zuspannposition einen fest vorgegebenen Weg in Löserichtung zurück. Die dann erreichte Position wird als neue Startposition festgelegt. Auf diese Weise wird einer sich beispielsweise durch Abnützung der Bremsvorrichtung ändernden Weg-Kraft-Charakteristik in gewissem Umfang Rechnung getragen. Ändert sich diese Charakteristik aber weitergehend, kann beispielsweise nach dem Lösen der Parkbremse in unerwünschter Weise eine Restkraft anliegen.

Dem könnte dadurch abgeholfen werden, dass die Parkbremse bis zum Anliegen keiner Restkraft geöffnet wird, um dann zusätzlich einen vorgegebenen Weg in Löserichtung zurückzulegen. Dieses Verfahren weist den Nachteil auf, dass die Bremse unnötig lange Verfahrwege zurücklegen muss, da in der Regel Hystereseeffekte die Restkraftwerte beeinflussen.

Der Erfindung liegt die Aufgabe zugrunde, die Nachteile des Standes der Technik zu beseitigen und insbesondere ein Verfahren zur Steuerung einer elektronischen Parkbremse beziehungsweise eine elektronische Parkbremse zur Verfügung zu stellen, die optimierte Verfahrwege aufweisen.

Diese Aufgabe wird mit den Merkmalen der unabhängigen Ansprüche gelöst.

Vorteilhafte Ausgestaltungen und Weiterbildungen der Erfindung ergeben sich aus den abhängigen Ansprüchen.

Die Erfindung baut auf dem gattungsgemäßen Verfahren dadurch auf, dass beim Lösen der Parkbremse diese im Rahmen einer Positionssteuerung zunächst bis zu einer vorbestimmten ersten Position in Löserichtung bewegt wird, dass die erste Position der Parkbremse bestimmt wird, indem bei einem Anziehen der Parkbremse im Rahmen einer Kraftmessung eine Position erfasst wird, bei der eine Kraft einsetzt, und ausgehend von dieser Position die erste Position als weiter in Löserichtung liegende Position bestimmt wird und dass nach dem Erreichen der vorbestimmten ersten Position eine Kraftmessung erfolgt und in Abhängigkeit des Ergebnisses dieser Kraftmessung bei der ersten Position eine weitere Bewegung der Parkbremse in Löserichtung bis zu einer zweiten Position erfolgen kann. Durch das Erfassen einer Position im Rahmen einer Kraftmessung beim Anziehen der Parkbremse kann beim Lösen der Parkbremse die erste Position unmittelbar ohne weitere Kraftmessung angefahren werden. Das Bestimmen der ersten Position kann zu einem beliebigen Zeitpunkt erfolgen, beispielsweise schon beim Anziehen der Parkbremse als auch erst dynamisch beim Lösen der Parkbremse. Es wird folglich das direkte Anfahren einer wahrscheinlich als Endposition geeigneten Stellung ermöglicht. Sollte nach dem Ermitteln der in dieser Position anliegenden Kraft ein weiteres Lösen der Parkbremse nötig sein, kann eine weitere Bewegung in Löserichtung zu einer zweiten Position erfolgen. Dies erlaubt eine weitere Optimierung des Verstellweges der Bremse, da nur bei Anliegen einer Kraft in unerwünschter Höhe eine weitere Bewegung stattfindet. Es kann das Ermitteln der anliegenden Kräfte sowohl während des Anfahrens einer Position bzw. kurz vor Ende der beabsichtigten Bewegung als auch erst nach dem Ende der Bewegung bei Stillstand erfolgen. Weiterhin kann damit die Entscheidung, ob die weitere zweite Position angesteuert werden soll, schon während der Bewegung zur ersten Position getroffen werden und somit gegebenenfalls die zweite Position kontinuierlich ohne Verweilen in der ersten Position angefahren werden. Des Weiteren kann bei der Evaluierung der ermittelten anliegenden Kraft diese beispielsweise mit einem Schwellenwert oder mit einem oder mehreren Wertebereichen verglichen werden, die auch zeitlich den Gegebenheiten anpassbar sind. Das Vorbestimmen der ersten Position auf der Grundlage einer Position, bei der eine Kraft einsetzt, ermöglicht bei einer entsprechenden Kenntnis des Systems außerdem eine wegoptimierte Kompensation der oben erwähnten Hystereseeffekte. Damit kombiniert das Verfahren eine Kraftsteuerung und eine Positionssteuerung für eine Parkbremse in optimierender Art und Weise.

In einer vorteilhaften Ausführungsform des Verfahrens kann vorgesehen sein, dass bei jedem Anzieh- und/oder Lösevorgang der Parkbremse die erste Position vorbestimmt wird. Dies ermöglicht eine besonders exakte Ansteuerung des Lösepunktes der Parkbremse und reduziert damit den möglichen Verfahrweg weiter.

In einer ebenfalls vorteilhaften Ausführungsform kann vorgesehen sein, dass die erste Position und/oder die im Rahmen einer Kraftmessung erfassten Positionen durch eine Plausibilitätsprüfung verifiziert werden. Ein derartiges Vorgehen erhöht die Sicherheit des Verfahrens erheblich, da so die Mess-und Positionswerte auf ihre Zuverlässigkeit hin überprüft werden können.

Gemäß einer weiteren vorteilhaften Ausführungsform des Verfahrens kann vorgesehen sein, dass beim Lösen der Parkbremse nach dem Erreichen einer beliebigen, einem gelösten Zustand der Parkbremse möglicherweise entsprechenden Position eine Kraftmessung erfolgt und dass in Abhängigkeit des Ergebnisses der Kraftmessung eine weitere Bewegung der Parkbremse in Löserichtung erfolgen kann. Dies ermöglicht ein iteratives, vom Ergebnis einer Kraftmessung abhängiges Lösen der Parkbremse in festen oder variablen Positionsschritten, die eventuell je nach Ausgestaltung des Bremssystems angepasst werden können. Auch hier kann die Bewegung nach dem Erreichen der entsprechenden Positionen zur Kraftmessung unterbrochen werden oder sich kontinuierlich fortsetzen, bis sich das Ergebnis der Kraftmessung im gewünschten Wertebereich befindet.

Das erfindungsgemäße Verfahren kann außerdem derart vorteilhaft ausgestaltet sein, dass beim Lösen der Parkbremse eine weitere Bewegung der Parkbremse in Löserichtung erfolgt, wenn die Kraftmessung ein Ergebnis ungleich Null liefert. Dadurch erfolgt das Lösen der Parkbremse solange, wie eine nicht verschwindende Restkraft anliegt bzw. wie die Restkraft außerhalb eines Wertebereichs liegt, der um einen Nullwert angenommen wird. Sowie diese Restkraft gleich Null beziehungsweise kleiner oder gleich einem entsprechenden Grenzwert ist, ist die Parkbremse als vollständig gelöst zu betrachten und der Lösevorgang kann enden.

Das erfindungsgemäße Verfahren kann außerdem dadurch besonders vorteilhaft weitergebildet werden, dass die Parkbremse durch einen Aktuator bewegt wird und die Kraftmessung an der Kraftübertragungsvorrichtung erfolgt. Wird eine Bremsvorrichtung durch die Parkbremse mit Hilfe eines Aktuators bewegt, kann die Kraftmessung an der Kraftübertragungsvorrichtung erfolgen und liefert so eine schnelle und direkte Rückkopplung eines Kraftmesswertes an das erfindungsgemäße Verfahren.

Die Erfindung baut auf der gattungsgemäßen Vorrichtung dadurch auf, dass beim Lösen der Parkbremse diese im Rahmen einer Positionssteuerung zunächst bis zu einer vorbestimmten ersten Position in Löserichtung bewegbar ist, dass die erste Position der Parkbremse bestimmbar ist, indem bei einem Anziehen der Parkbremse im Rahmen einer Kraftmessung eine Position (KEP) erfasst wird, bei der eine Kraft (FR) einsetzt, und ausgehend von dieser Position die erste Position als weiter in Löserichtung liegende Position bestimmt wird und dass nach dem Erreichen der vorbestimmten ersten Position eine Kraftmessung erfolgen kann und in Abhängigkeit des Ergebnisses dieser Kraftmessung bei der ersten Position eine weitere Bewegung der Parkbremse in Löserichtung bis zu einer zweiten Position erfolgen kann. Auf diese Weise werden die Vorteile und Besonderheiten der erfindungsgemäßen Verfahren auch im Rahmen einer Vorrichtung realisiert. Dies gilt auch für die nachfolgend angegebenen besonders bevorzugten Ausführungsformen der erfindungsgemäßen Vorrichtung.

Die erfindungsgemäße Vorrichtung ist besonders vorteilhaft dadurch weitergebildet, dass die erste Position bei jedem Anzieh- und/oder Lösevorgang der Parkbremse vorbestimmbar ist.

Eine ebenfalls vorteilhafte Weiterbildung ergibt sich dadurch, dass die erste Position und/oder die im Rahmen einer Kraftmessung erfassten Positionen durch eine Plausibilitätsprüfung verifizierbar sind.

Eine vorteilhafte Weiterbildung der erfindungsgemäßen Vorrichtung ergibt sich außerdem dadurch, dass beim Lösen der Parkbremse nach dem Erreichen einer beliebigen, einem gelösten Zustand der Parkbremse möglicherweise entsprechenden Position eine Kraftmessung erfolgen kann und dass in Abhängigkeit des Ergebnisses der Kraftmessung eine weitere Bewegung der Parkbremse in Löserichtung erfolgen kann.

Des Weiteren kann eine Ausführungsform dadurch vorteilhaft weitergebildet sein, dass beim Lösen der Parkbremse eine weitere Bewegung der Parkbremse in Löserichtung erfolgt, wenn die Kraftmessung ein Ergebnis ungleich Null liefert.

Eine ebenfalls nützliche Weiterbildung der erfindungsgemäßen Vorrichtung besteht darin, dass die Parkbremse eine Kraftübertragungsvorrichtung aufweist und die Kraftmessung an der Kraftübertragungsvorrichtung erfolgt.

Die Erfindung betrifft weiterhin eine Betriebsbremse mit einer erfindungsgemäßen Vorrichtung.

Der Erfindung liegt die Erkenntnis zugrunde, dass eine Optimierung des Lösevorgangs einer elektronischen Parkbremse durch das Aufzeichnen von Weg-Kraft-Informationen beim Anziehen der Bremse erfolgen kann. Beim Lösen der Bremse kann auf Basis dieser Informationen eine erste optimierte Position angefahren werden. Sollte dann noch eine unerwünschte Restkraft anliegen, kann in gegebenenfalls mehreren Schritten die Bremse bis zum Verschwinden dieser Restkraft gelöst werden.

Die Erfindung wird nun unter Bezugnahme auf die beigefügten Zeichnungen anhand bevorzugter Ausführungsformen beispielhaft erläutert.

Es zeigen:
- Figuren 1a - 1d: Flussdiagramme zur Erläuterung eines er- findungsgemäßen Verfahrens;
- Figuren 2a - 2c: Funktionsblockdiagramme zur Erläuterung einer erfindungsgemäßen Vorrichtung in unterschiedlichen Zuständen.
- Figur 3: ein Kraft-Position-Diagramm.

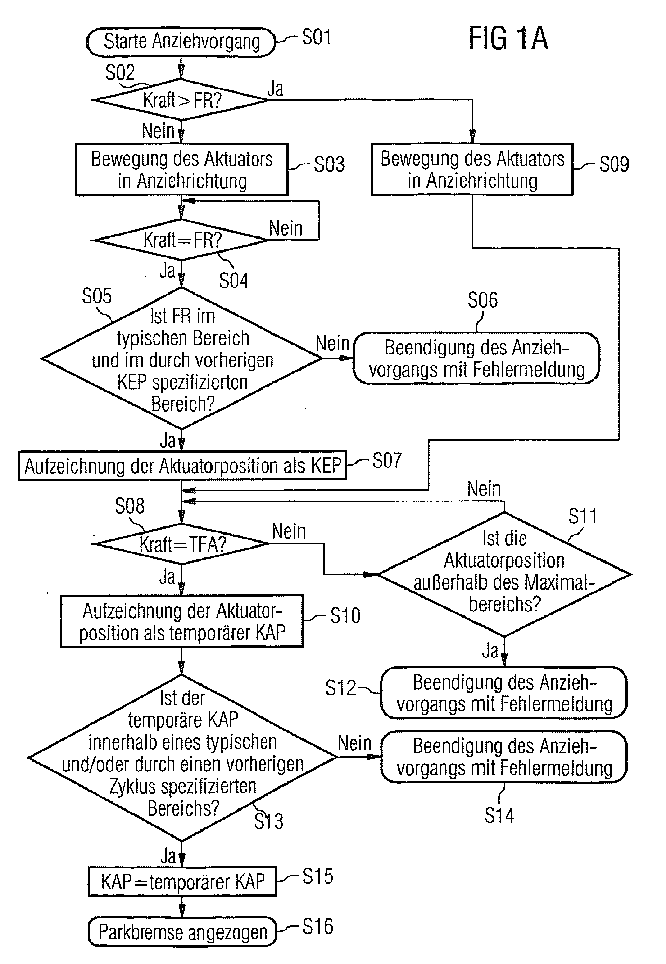

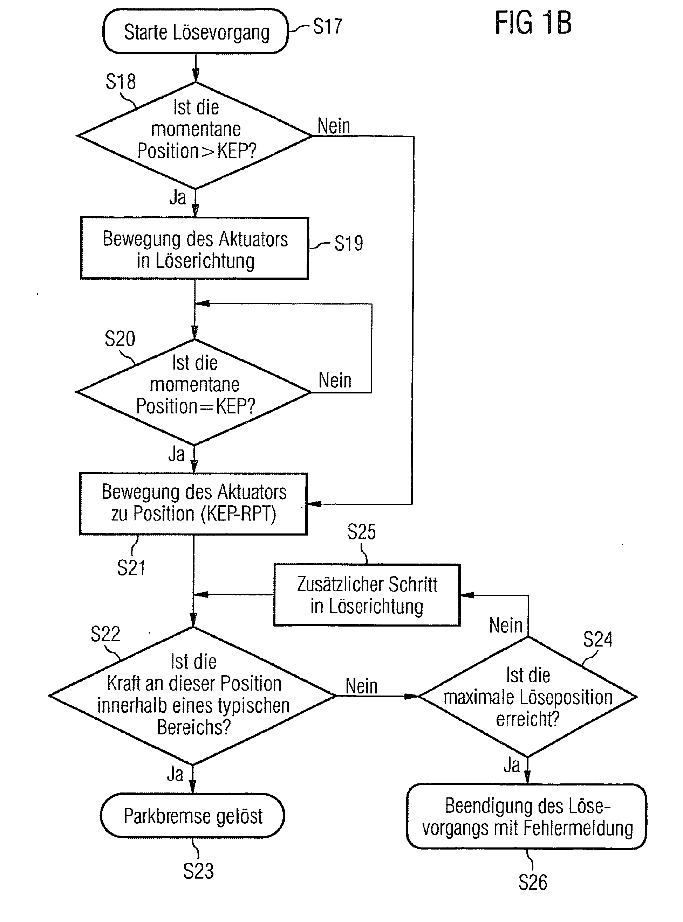

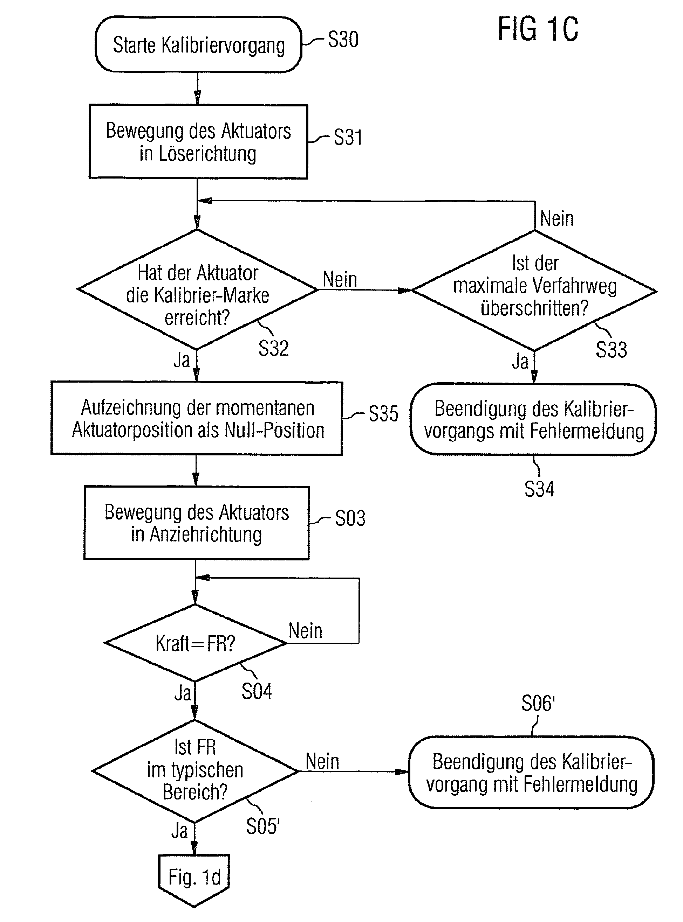

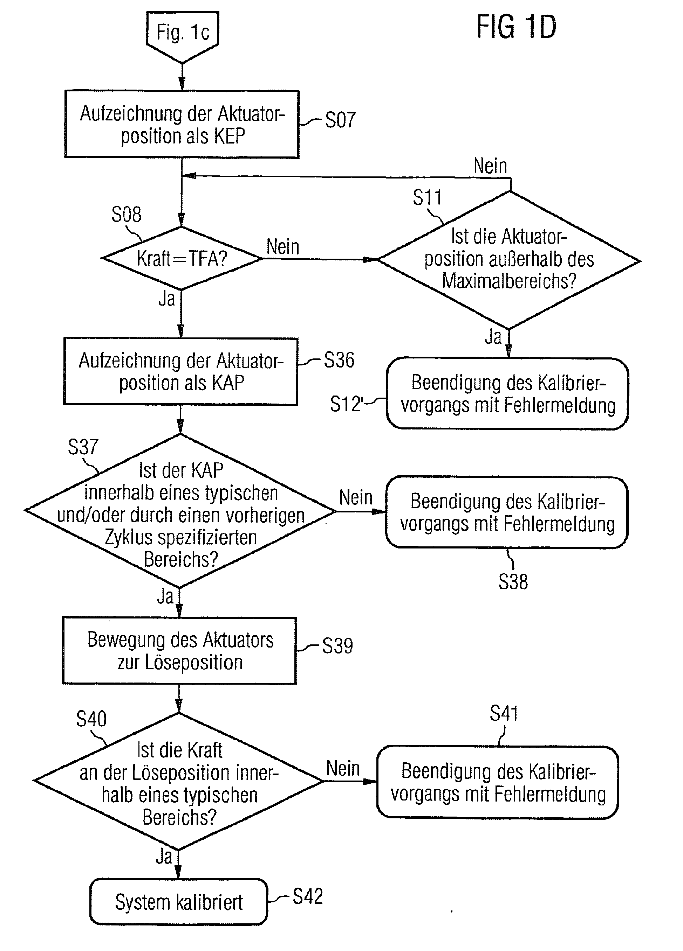

Die Figuren 1a - 1d zeigen Flussdiagramme zur Erläuterung eines erfindungsgemäßen Verfahrens. Das erfindungsgemäße Verfahren setzt mit dem Schritt S01 ein, mit dem die elektronische Steuerung bzw. Regelung der Feststellbremsanlage den Befehl "Parkbremse anziehen" beginnt umzusetzen. Dazu findet, in Entscheidung S02 dargestellt, eine Überprüfung der momentan an der Kraftübertragungsvorrichtung anliegenden Kraft statt. Ist diese kleiner als eine sogenannte Referenzkraft ("FR = force reference"), wird der Aktuator in Anziehrichtung bewegt (Schritt S03). Sowie die an der Kraftübertragungsvorrichtung anliegende Kraft den Wert FR erreicht oder überschreitet (Entscheidung S04), wird überprüft, ob der momentane Kraftwert innerhalb eines typischen Bereichs und innerhalb eines Bereichs liegt, der durch den vom vorherigen Zyklus bestimmten Krafteinsatzpunkt (KEP) spezifiziert wird (Entscheidung S05). Fällt diese Plausibilitätsprüfung negativ aus, kann hier der Anziehvorgang mit einer Fehlermeldung (Schritt S06) enden, und/oder es kann ein Fehler gemeldet werden. Im Falle eines positiven Prüfungsergebnis fährt das Verfahren mit Schritt S07 fort. Hier wird die momentane Aktuatorposition als neuer Krafteinsatzpunkt (KEP) abgespeichert. Nach diesem Schritt setzt sich das Verfahren mit der Entscheidung S08 fort, in der wiederum eine Überprüfung der momentan anliegenden Kraft vorgenommen wird. Diese Überprüfung findet ebenfalls statt, wenn das Verfahren bei der Überprüfung der an der Kraftübertragungsvorrichtung anliegenden Kraft in Entscheidung S02 einen Wert ermittelt hat, der größer als FR ist und mit Schritt S09 ebenfalls wie in Schritt S03 die Bewegung des Aktuators in Anziehrichtung initiiert hat. Überschreitet oder erreicht in Entscheidung S08 die anliegende Kraft einen zweiten Grenzwert, die Sollanziehkraft ("TFA = target force apply"), so wird mit Schritt S10 die augenblickliche Aktuatorposition als temporärer Kraftabschaltpunkt aufgezeichnet.

Anderweitig erfolgt eine Überprüfung der momentanen Aktuatorposition hinsichtlich eines Maximalwertes (Entscheidung S11). Ist dieser nicht überschritten, setzt sich das Verfahren mit der Entscheidung S08 fort, andernfalls endet das Verfahren mit einer Fehlermeldung an dieser Stelle mit Schritt S12.

Mit dem Aufzeichnen des Kraftabschaltpunktes wird in Entscheidung S13 überprüft, ob der Wert KAP innerhalb eines typischen und/oder durch einen vorherigen Zyklus spezifizierten Bereichs liegt. Im Falle eines negativen Resultats endet das verfahren an dieser Stelle mit einer Fehlermeldung in Schritt S14, im anderen Falle wird der temporäre Kraftabschaltpunkt als neu zu verwendender Kraftabschaltpunkt KAP gespeichert (Schritt S15). Jetzt befindet sich die Feststellbremsanlage im festgestellten beziehungsweise zugespannten Zustand (Schritt S16).

Erteilt die Steuerung bzw. Regelung, einen Fahrerwunsch repräsentierend oder durch eine automatische Funktion ausgelöst, den Befehl "Parkbremse lösen", dargestellt in Schritt S17, erfolgt eine Steuerung beziehungsweise Überprüfung der Position des Aktuators. Es wird, dargestellt in Entscheidung S18, die Position hinsichtlich des Erreichens des KEP verglichen. Ist dieser nicht erreicht, beginnt sich in Schritt S19 der Aktuator in eine der Anziehrichtung entgegengerichtete Richtung, nämlich der Löserichtung zu bewegen. Diese Bewegung dauert an, bis in Entscheidung S20 bei der Überprüfung der momentanen Aktuatorposition festgestellt wird, dass der KEP erreicht ist. Dann setzt sich die Bewegung des Aktuators ebenfalls in Löserichtung mit Schritt S21 fort. Allerdings wird jetzt keine absolute Position angefahren, sondern der Aktuator wird relativ zum KEP um den Lösepositionsweg ("RPT = release position travel") verfahren. An dieser Stelle setzt das Verfahren ebenfalls ein, wenn in Schritt 18 bereits ein Erreichen des KEP festgestellt wurde. Nach dem Zurücklegen des RPT wird erneut, dargestellt in Entscheidung S22, die an der Kraftübertragungsvorrichtung anliegende Kraft ermittelt. Unterschreitet diese einen Solllösekraft ("TFR = target force release") genannten Grenzwert und befindet sie sich innerhalb eines typischen Bereichs, ist mit Schritt S23 das Verfahren beendet. Anderenfalls wird überprüft, ob die Aktuatorposition einen Maximalwert erreicht hat (Entscheidung S24). Wenn dies nicht der Fall ist, wird der Aktuator um einen weiteren zusätzlichen Schritt in Löserichtung bewegt (Schritt S25) und erneut mit Schritt S22 die anliegende Kraft überprüft. Im anderen Fall endet das Verfahren an dieser Stelle in Schritt S26 mit einer Fehlermeldung. Das Verfahren wiederholt die Schritte S22, S24 und S25 iterativ solange, das heißt, es verfährt den Aktuator in Löserichtung und vergleicht die dort anliegende Kraft mit dem Grenzwert TFR, bis die Restkraft unter den Grenzwert gefallen ist bzw. ein maximaler Löseweg gefahren ist. Damit ist das Verfahren beendet.

Es kann weiterhin vorgesehen sein, dass das erfindungsgemäße Verfahren einen Kalibrierlauf durchführt. Dazu setzt das Verfahren mit Schritt S30 ein, mit dem der Kalibrierlauf gestartet wird. Dabei wird zunächst der Aktuator in Löserichtung verfahren (Schritt S31). Gleichzeitig wird in Entscheidung S32 ermittelt, ob der Aktuator eine Null-Position bzw. eine Kalibriermarke erreicht hat. Ist dies nicht der Fall, wird, falls ein maximaler Verfahrweg überschritten wurde (Entscheidung S33), das Verfahren in Schritt S34 mit einer Fehlermeldung beendet. Im anderen Falle setzt sich das Verfahren mit der Entscheidung S32 fort. Sowie die Kalibriermarke bzw. die Null-Position erreicht worden ist, wird in Schritt S35 die augenblickliche Position des Aktuators als Null-Position abgespeichert.

Im Folgenden durchläuft das Verfahren Schritte, die den vorhergehend zu Figur 1a beschriebenen Schritten S03 bis S08, S11 und S12 entsprechen und deshalb nicht erneut erläutert werden. Dabei sind die Schritte S05, S06 und S12 entsprechend anzupassen und werden deshalb mit S05', S06' und S12' bezeichnet. Nachdem in Entscheidung S08 das Anliegen von TFA an der Kraftübertragungsvorrichtung erkannt wurde, wird in Schritt S36 die momentane Position als Kraftabschaltpunkt (KAP) abgespeichert.

Es wird weiter in Entscheidung S37 überprüft, ob der KAP-Wert innerhalb eines typischen und/oder durch einen vorherigen Zyklus spezifizierten Bereichs liegt. Sollte dies nicht der Fall sein, wird das Verfahren in Schritt S38 mit einer Fehlermeldung beendet.

Das Verfahren setzt sich dann mit Schritt 39 fort und löst den Aktuator bis zur berechneten Löseposition. Dort erfolgt eine Überprüfung der an der Kraftübertragungsvorrichtung anliegenden Kraft (Entscheidung S40). Sollte diese sich nicht innerhalb eines typischen Bereichs befinden, wird das Verfahren in Schritt S41 mit einer Fehlermeldung beendet, andernfalls befindet sich das System mit S42 in einem kalibrierten Zustand.

So kann für die Punkte KEP und KAP eine Absolutpositionierung vorgenommen werden, die unter anderem zur Plausibilisierung der in den weiteren Anziehvorgängen ermittelten Werte herangezogen werden kann.

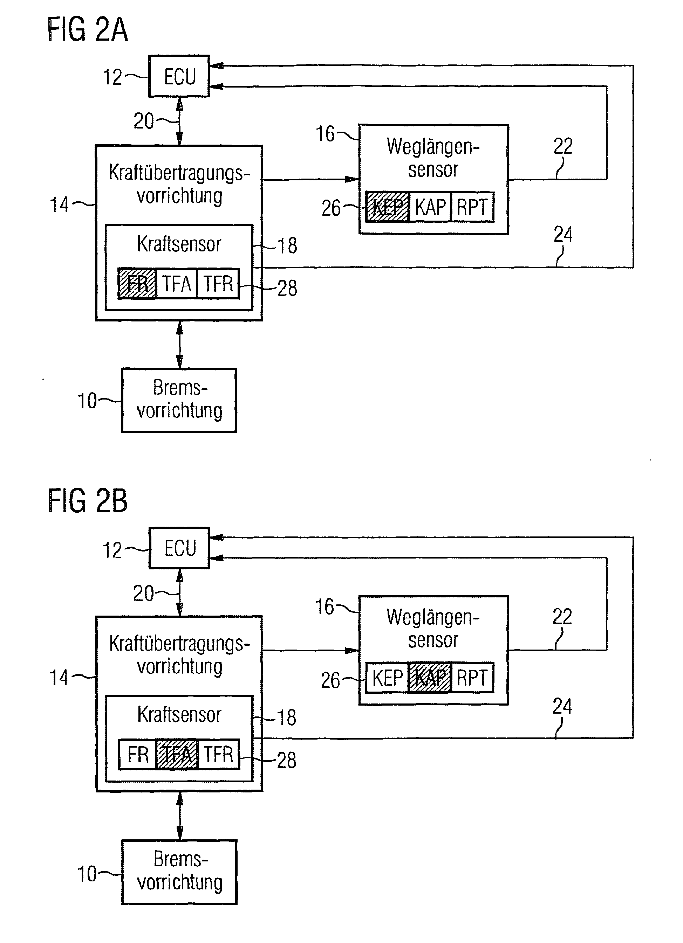

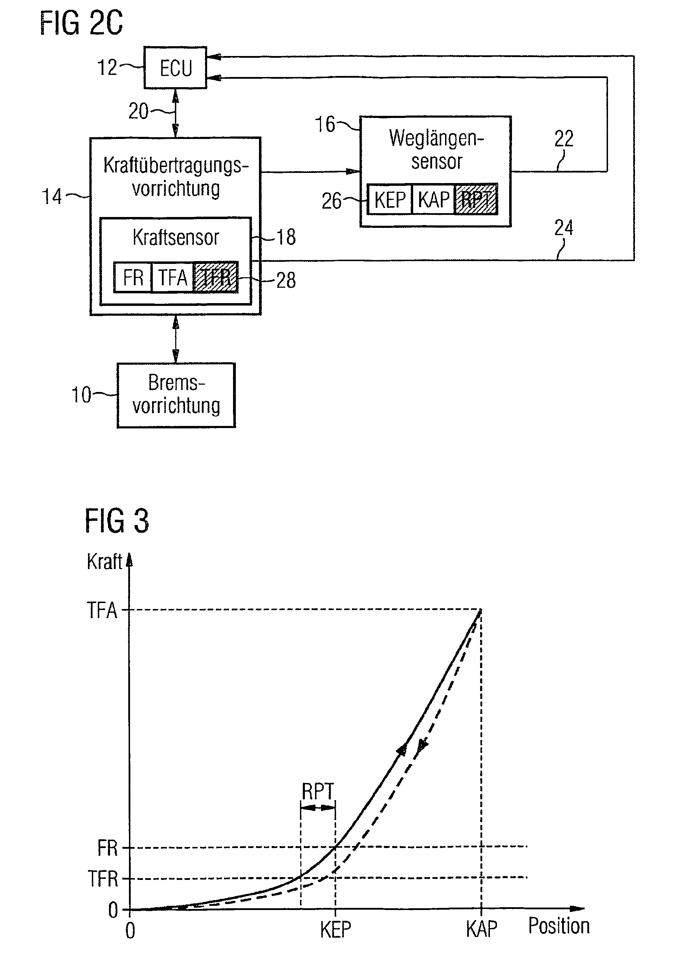

Die Figuren 2a - 2b zeigen Funktionsblockdiagramme zur Erläuterung einer erfindungsgemäßen Vorrichtung in unterschiedlichen Zuständen. Die abgebildete Ausführungsform weist neben dem gemäß dem Stand der Technik bekannten elektronischen, mechanischen und eventuell hydraulischen Komponenten, hier unter dem Begriff Bremsvorrichtung 10 zusammengefasst, eine elektronische Steuereinheit (ECU) 12, eine Kraftübertragungsvorrichtung 14, sowie einen Weglängensensor 16 und einen Kraftsensor 18 auf. In diesem Zusammenhang soll wie auch schon im beschreibenden Teil der Begriff Kraftübertragungsvorrichtung sowohl einen Aktuator, alle Teile, die Kräfte auf die Bremsen übertragen als auch Bestandteile, an denen die Kraft des Aktuators wirkt, umfassen. Der Kraftsensor 18 kann an beliebiger geeigneter Stelle sowohl innerhalb dieser Kraftübertragungsvorrichtung 14 als auch außerhalb, eventuell auch in der Bremsvorrichtung 10 angebracht werden. Die elektronische Steuereinheit 12 ist über die Signalleitung 20 mit der Kraftübertragungsvorrichtung 14 verbunden, die in mechanischer Wirkverbindung mit der Bremsvorrichtung 10 steht. Der Weglängensensor 16 erfasst ein von der Kraftübertragungsvorrichtung 14 geliefertes Positionssignal und gibt dieses als Positionsinformation 22 an die elektronische Steuereinheit 12 weiter. Analog erzeugt der Kraftsensor 18 ein der momentan an der Kraftübertragungsvorrichtung oder der Bremsvorrichtung anliegenden Kraft entsprechendes Messsignal 24 und gibt dieses ebenfalls an die elektronische Steuereinheit 12 aus. Sowohl der Weglängensensor 16 als auch der Kraftsensor 18 sind mit einer symbolischen Anzeige 26 beziehungsweise 28 versehen, welche verschiedene ausgewählte Signale abbildet. Bei dem Weglängensensor 20 sind die Signale KAP, KEP und RPT hervorgehoben, die Anzeige 28 des Kraftsensors 18 hebt die Signale FR, TFA und TFR hervor. Die in den Figuren 2a, 2b und 2c abgebildete Ausführungsform ist in ihren Bestandteilen und damit auch in ihren Bezugszeichen identisch, sie unterscheidet sich lediglich durch die von den Sensoren 16 und 18 gelieferten Signale 20 und 22, was unterschiedlichen Aktuatorpositionen und damit unterschiedlichen Zuständen der Parkbremse entspricht.

In Figur 2a hat die elektronische Steuerung 12 dem Aktuator der Kraftübertragungsvorrichtung 14 den Befehl erteilt, sich in Anziehrichtung zu bewegen, das heißt, die Parkbremse soll angezogen werden. Im momentan abgebildeten Zustand liegt an der Kraftübertragungsvorrichtung 14 die Referenzkraft FR an. Entsprechend liefert der Wegsensor 16 das den Krafteinsatzpunkt (KEP) darstellende Signal 22 an die elektronische Steuereinheit 12, die diesen Weglängenwert aufzeichnet, sofern die Plausibilitätsprüfung erfolgreich durchgeführt wurde.

In Figur 2b ist die Stellung für den festgestellten Zustand der Bremse erreicht. Dabei liegt an der Kraftübertragungsvorrichtung 14 die sogenannte Sollanziehkraft (TFA) an, deren Betrag mittels des Kraftsensors 18 als Signal 24 an die elektronische Steuereinheit 12 weitergeleitet wird. Dieser Kraftbetrag wird nun mit Hilfe des Weglängensensors 16 mit der momentanen Aktuatorposition korreliert. Dazu speichert die elektronische Steuereinheit 12 das Weglängensignal 22 zunächst als temporären Kraftabschaltpunkt zwischen, vergleicht diesen im Rahmen einer Plausibilitätsprüfung mit einem typischen und/oder durch einen vorherigen Zyklus spezifizierten Wertebereich und speichert ihn im Falle einer erfolgreichen Überprüfung als neu zu verwendenden Kraftabschaltpunkt (KAP) ab.

Figur 2c bildet einen Zustand der elektronischen Feststellbremsanlage ab, der beim Lösen der Parkbremse eingenommen wird. Dabei wird der Aktuator der Kraftübertragungsvorrichtung 14 über ein Signal 20 der elektronischen Steuereinheit 12 zunächst wiederum bis zum Erreichen des Krafteinsatzpunktes (KEP) verfahren, entsprechend dem in Figur 2a abgebildeten Zustand. Nach Erreichen des KEP wird der Aktuator der Kraftübertragungsvorrichtung 14 von dort ausgehend um den Lösepositionsweg RPT weiter in Löserichtung verfahren. Entsprechend zeigt der Weglängensensor 16 als Signal 22 das Erreichen des RPT an. Die elektronische Steuereinheit 12 erfasst dieses Signal 22 und vergleicht das vom Kraftsensor 18 gelieferte Kraftsignal 24 mit einem Grenzwert, der Solllösekraft (TFR). Da momentan am Aktuator der Kraftübertragungsvorrichtung 14 tatsächlich die Solllösekraft TFR anliegt, stellt der in Figur 2c dargestellte Zustand den gelösten Zustand der Parkbremse dar.

Die Figur 3 zeigt ein Kraft-Position-Diagramm. Es veranschaulicht die beim erfindungsgemäßen Verfahren und bei einer erfindungsgemäßen Vorrichtung ablaufenden Bewegungen des Aktuators sowie ein Beispiel für die am Aktuator anliegende Kraft. Auf der Abszisse des Diagramms ist eine der momentanen Aktuatorstellung entsprechende Position aufgetragen, die Ordinate gibt die an der Kraftübertragungsvorrichtung anliegende Kraft wieder. An Positionswerten sind der Krafteinsatzpunkt (KEP) und der Kraftabschaltpunkt (KAP) sowie der Lösepositionsweg (RPT), an Kraftwerten sind die Solllösekraft (TFR), die Referenzkraft (FR) sowie die Sollanziehkraft (TFA) aufgetragen. Die mit einem Pfeil versehene durchgezogene Kurve stellt beispielhaft die Zuordnung der Aktuatorposition zu der an der Kraftübertragungsvorrichtung momentan anliegenden Kraft beim Anziehen der Parkbremse dar, die strichpunktierte, mit einem in die umgekehrte Richtung zeigenden Pfeil versehene Kurve stellt die Zuordnung der Aktuatorposition zu der an der Kraftübertragungsvorrichtung momentan anliegenden Kraft beim Lösen der Parkbremse dar.

Bei einer Bewegung des Aktuators, ausgehend von der Nullposition, in Richtung KEP, folgt die Kraft-Position-Funktion der durchgezogenen Linie. Erreicht die an der Kraftübertragungsvorrichtung anliegende Kraft den Wert FR, wird die momentane Aktuatorposition als KEP festgelegt. Beim weiteren Anziehen der Parkbremse erreicht die an der Kraftübertragungsvorrichtung anliegende Kraft den Wert TFA, weiterhin der durchgezogenen Linie folgend. Diesem Kraftwert wird die Position KAP zugeordnet. Beim Lösen der Parkbremse folgt die der Position zugeordnete Kraft jetzt der strichpunktierten Linie. Dabei wird zunächst die beim Anziehen der Parkbremse ermittelte Position KEP angefahren. Von dort ausgehend wird der Aktuator um die relative Weglänge RPT weiter in Löserichtung verfahren. Durch die physikalischen Gegebenheiten der Bremsanlage verläuft die strichpunktierte Linie in der Regel unterhalb der durchgezogenen Linie, was durch die weiter oben erwähnten Hystereseeffekte bedingt ist. Aus diesem Grund ist die beim Erreichen der Position KEP an der Kraftübertragungsvorrichtung anliegende Kraft kleiner als FR und eventuell größer als TFR, würde aber bei einem direkt darauf folgenden Anziehen der Parkbremse nicht sofort den Wert FR erreichen. An der durch die relative Weglänge RPT bestimmten Position wird nun überprüft, ob die an der Kraftübertragungsvorrichtung anliegende Kraft kleiner als TFR ist. Dies ist in Figur 3 der Fall, womit das erfindungsgemäße Verfahren an dieser Stelle endet. Sollte die an der Kraftübertragungsvorrichtung anliegende Kraft noch den Wert TFR übersteigen, würde der Aktuator weiter in Löserichtung bewegt, bis die an der Kraftübertragungsvorrichtung anliegende Kraft den Wert TFR unterschreitet.

Es wird ein Verfahren zur Steuerung bzw. Regelung einer elektronischen Feststellbremsanlage sowie eine elektronische Feststellbremsanlage offenbart, wobei zum Erreichen des gelösten Zustands der Feststellbremsanlage ein wegoptimiertes Verfahren angewendet wird. Es werden beim Anziehen der Parkbremse Weg-Kraft-Werte ermittelt und plausibilisiert, mit deren Hilfe beim Lösen der Bremse eine erste optimierte Position angefahren wird. Übersteigt die danach anliegende Restkraft einen Grenzwert, wird die Parkbremse weiter gelöst, bis zum der Grenzwert unterschritten bzw. ein maximal definierter Löseweg gefahren ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Steuern einer elektronischen Parkbremse, bei dem bei einem Lösen der Parkbremse eine Kraftsteuerung und eine Positionssteuerung stattfinden,
**dadurch gekennzeichnet,**
- **dass** beim Lösen der Parkbremse diese im Rahmen einer Positionssteuerung zunächst bis zu einer vorbestimmten ersten Position (KEP-RPT) in Löserichtung bewegt wird (S21),
- **dass** die erste Position (KEP-RPT) der Parkbremse bestimmt wird, indem bei einem Anziehen (S03) der Parkbremse im Rahmen einer Kraftmessung eine Position (KEP) erfasst wird (S07), bei der eine Kraft (FR) einsetzt, und ausgehend von dieser Position (KEP) die erste Position (KEP-RPT) als weiter in Löserichtung liegende Position (KEP-RPT) bestimmt wird und
- **dass** nach dem Erreichen der vorbestimmten ersten Position (KEP-RPT) eine Kraftmessung (S22) erfolgt und in Abhängigkeit des Ergebnisses dieser Kraftmessung bei der ersten Position (KEP-RPT) eine weitere Bewegung (S25) der Parkbremse in Löserichtung bis zu einer zweiten Position erfolgen kann.

2. Verfahren nach Anspruch 1, **dadurch gekennzeichnet, dass** bei jedem Anzieh- und/oder Lösevorgang (S03, S19) der Parkbremse die erste Position (KEP-RPT) vorbestimmt wird.

3. Verfahren nach Anspruch 1 oder 2, **dadurch gekennzeichnet, dass** die erste Position (KEP-RPT) und/oder die im Rahmen einer Kraftmessung (S02, S04, S08) erfassten Positionen (KEP, KAP) durch eine Plausibilitätsprüfung verifiziert werden.

4. Verfahren nach einem der vorhergehenden Ansprüche,
**dadurch gekennzeichnet,**
- **dass** beim Lösen der Parkbremse nach dem Erreichen einer beliebigen, einem gelösten Zustand der Parkbremse möglicherweise entsprechenden Position eine Kraftmessung (S22) erfolgt und
- **dass** in Abhängigkeit des Ergebnisses der Kraftmessung eine weitere Bewegung (S22) der Parkbremse in Löserichtung erfolgen kann.

5. Verfahren nach einem der vorhergehenden Ansprüche, **dadurch gekennzeichnet, dass** beim Lösen (S25) der Parkbremse eine weitere Bewegung der Parkbremse in Löserichtung erfolgt, wenn die Kraftmessung (S22) ein Ergebnis ungleich Null liefert.

6. Verfahren nach einem der vorhergehenden Ansprüche, **dadurch gekennzeichnet, dass** die Parkbremse durch einen Aktuator (14) bewegt wird und die Kraftmessung (S22) an der Kraftübertragungsvorrichtung (14) erfolgt.

7. Elektronische Parkbremse, die durch eine Kraftsteuerung und eine Positionssteuerung lösbar ist, **dadurch gekennzeichnet,**
- **dass** beim Lösen der Parkbremse diese im Rahmen einer Positionssteuerung zunächst bis zu einer vorbestimmten ersten Position (KEP-RPT) in Löserichtung bewegbar ist (S22),
- **dass** die erste Position (KEP-RPT) der Parkbremse bestimmbar ist, indem bei einem Anziehen (S03) der Parkbremse im Rahmen einer Kraftmessung eine Position (KEP) erfasst wird (S07), bei der eine Kraft (FR) einsetzt, und ausgehend von dieser Position (KEP) die erste Position (KEP-RPT) als weiter in Löserichtung liegende Position (KEP-RPT) bestimmt wird und
- **dass** nach dem Erreichen der vorbestimmten ersten Position (KEP-RPT) eine Kraftmessung (S22) erfolgen kann und in Abhängigkeit des Ergebnisses dieser Kraftmessung bei der ersten Position (KEP-RPT) eine weitere Bewegung (S25) der Parkbremse in Löserichtung bis zu einer zweiten Position erfolgen kann.

8. Elektronische Parkbremse nach Anspruch 7, **dadurch gekennzeichnet, dass** die erste Position (KEP-RPT) bei jedem Anzieh- und/oder Lösevorgang (S03, S19) der Parkbremse vorbestimmbar ist.

9. Elektronische Parkbremse nach Anspruch 7 oder 8, **dadurch gekennzeichnet, dass** die erste Position (KEP-RPT) und/oder die im Rahmen einer Kraftmessung (S02, S04, S08) erfassten Positionen (KEP, KAP) durch eine Plausibilitätsprüfung verifizierbar sind.

10. Elektronische Parkbremse nach einem der Ansprüche 7 bis 9, **dadurch gekennzeichnet,**
- **dass** beim Lösen (S25) der Parkbremse nach dem Erreichen einer beliebigen, einem gelösten Zustand der Parkbremse möglicherweise entsprechenden Position eine Kraftmessung (S22) erfolgen kann und
- **dass** in Abhängigkeit des Ergebnisses der Kraftmessung eine weitere Bewegung (S22) der Parkbremse in Löserichtung erfolgen kann.

11. Elektronischen Parkbremse nach einem der Ansprüche 7 bis 10, **dadurch gekennzeichnet, dass** beim Lösen (S25) der Parkbremse eine weitere Bewegung der Parkbremse in Löserichtung erfolgt, wenn die Kraftmessung (S22) ein Ergebnis ungleich Null liefert.

12. Elektronische Parkbremse nach einem der Ansprüche 7 bis 11, **dadurch gekennzeichnet, dass** die Parkbremse eine Kraftübertragungsvorrichtung (14) aufweist und die Kraftmessung an der Kraftübertragungsvorrichtung (14) erfolgt.

13. Betriebsbremse mit einer Vorrichtung nach einem der Ansprüche 7 bis 12.

14. Kraftfahrzeug mit einer elektronischen Parkbremse nach einem der Ansprüche 7 bis 12.

## Claims

1. Method for controlling an electronic parking brake, wherein when the parking brake is released, a force control operation and a position control operation take place,
**characterised in that**
- during release of the parking brake, said parking brake is first moved (S21) to a predetermined first position (KEP-RPT) in the release direction in the context of a position control operation,
- the first position (KEP-RPT) of the parking brake is determined, **in that** during application (S03) of the parking brake a position (KEP), in which a force (FR) commences, is detected in the context of a force measurement, and the first position (KEP-RPT) is determined as a position (KEP-RPT) further on in the release direction based on this position (KEP),
- a force measurement (S22) takes place after the predetermined first position (KEP-RPT) has been achieved and a further movement (S25) of the parking brake in the release direction to a second position can take place as a function of the result of this force measurement in the first position (KEP-RPT).

2. Method according to claim 1,
**characterised in that**
the first position (KEP-RPT) is predetermined during every apply and/or release process (S03, S19) of the parking brake.

3. Method according to claim 1 or 2,
**characterised in that**
the first position (KEP-RPT) and/or the positions (KEP, KAP) detected in the context of a force measurement (S02, S04, S08) are verified by means of a plausibility check.

4. Method according to one of the preceding claims,
**characterised in that**
- during release of the parking brake, after any position, possibly corresponding to a released state of the parking brake, has been achieved, a force measurement (S22) takes place and
- a further movement (S22) of the parking brake can take place in the release direction as a function of the result of the force measurement.

5. Method according to one of the preceding claims,
**characterised in that**
during release (S25) of the parking brake a further movement of the parking brake takes place in the release direction, if the force measurement (S22) supplies a result that is not equal to zero.

6. Method according to one of the preceding claims,
**characterised in that**
the parking brake is moved by an actuator (14) and the force measurement (S22) takes place at the force transfer device (14).

7. Electronic parking brake, which can be released by means of a force control operation and a position control operation, **characterised in that**
- when the parking brake is released, it is first moved to a predetermined first position (KEP-RPT) in the release direction in the context of a position control operation,
- the first position (KEP-RPT) of the parking brake can be determined, **in that** when the parking brake is applied (S03) a position (KEP), in which a force (FR) commences, is detected in the context of a force measurement and the first position (KEP-RPT) is determined as a position (KEP-RPT) further on in the release direction based on this position (KEP) and
- after the predetermined first position (KEP-RPT) has been achieved, a force measurement (S22) can take place and a further movement (S25) of the parking brake can take place in the release direction to a second position as a function of the result of this force measurement in the first position (KEP-RPT).

8. Electronic parking brake according to claim 7,
**characterised in that**
the first position (KEP-RPT) can be determined during any apply and/or release process (SO3, S19) of the parking brake.

9. Electronic parking brake according to claim 7 or 8,
**characterised in that**
the first position (KEP-RPT) and/or the positions (KEP, KAP)detected in the context of a force measurement (S02, S04, S08) can be verified by means of a plausibility check.

10. Electronic parking brake according to one of claims 7 to 9,
**characterised in that**
- when the parking brake is released (S25) after achieving any position possibly corresponding to a released state of the parking brake, a force measurement (S22) can take place and
- a further movement (S22) of the parking brake can take place in the release direction as a function of the result of the force measurement.

11. Electronic parking brake according to one of claims 7 to 10,
**characterised in that**
when the parking brake is released (S25), a further movement of the parking brake in the release direction takes place, if the force measurement (S22) supplies a result that is not equal to zero.

12. Electronic parking brake according to one of claims 7 to 11,
**characterised in that**
the parking brake has a force transfer device (14) and force measurement takes place at the force transfer device (14).

13. Service brake with a device according to one of claims 7 to 12.

14. Motor vehicle with an electronic parking brake according to one of claims 7 to 12.

## Revendications

1. Procédé pour commander un frein de stationnement électronique, dans lequel une commande de force et une commande de position ont lieu lors d'un desserrage du frein de stationnement,
**caractérisé en ce que,**
- lors du desserrage du frein de stationnement, celui-ci est d'abord déplacé (S21) dans le cadre d'une commande de position jusqu'à une première position prédéterminée (KEP-RPT) dans le sens de desserrage,
- la première position (KEP-RPT) du frein de stationnement est déterminée en déterminant (S07), lors d'un serrage (S03) du frein de stationnement, dans le cadre d'une mesure de force, une position (KEP) dans laquelle se produit une force (FR) et, à partir de cette position (KEP), la première position (KEP-RPT) est déterminée comme une position (KEP-RPT) située plus loin dans le sens de desserrage, et,
- après avoir atteint la première position prédéterminée (KEP-RPT), il se produit une mesure de force (S22) est effectuée et, en fonction du résultat de cette mesure de force dans la première position (KEP-RPT), un autre déplacement (S25) du frein de stationnement peut s'effectuer dans le sens de desserrage jusqu'à une seconde position.

2. Procédé selon la revendication 1, **caractérisé en ce que** la première position (KEP-RPT) est prédéterminée à chaque opération de serrage et/ou de desserrage (S03, S19) du frein de stationnement.

3. Procédé selon la revendication 1 ou 2, **caractérisé en ce que** la première position (KEP-RPT) et/ou les positions (KEP, KAP) déterminées dans le cadre d'une mesure de force (S02, S04, S08) est/sont vérifiée(s) par un contrôle de vraisemblance.

4. Procédé selon l'une quelconque des revendications précédentes, **caractérisé en ce que,**
- lors du desserrage du frein de stationnement, une mesure de force (S22) est effectuée après avoir atteint une quelconque position correspondant éventuellement à un état desserré du frein de stationnement, et,
- en fonction du résultat de la mesure de force, un autre déplacement (S22) du frein de stationnement peut se faire dans le sens de desserrage.

5. Procédé selon l'une quelconque des revendications précédentes, **caractérisé en ce que,** lors du desserrage (S25) du frein de stationnement, il se produit un autre déplacement du frein de stationnement dans le sens de desserrage, si la mesure de force (S22) fournit un résultat différent de zéro.

6. Procédé selon l'une quelconque des revendications précédentes, **caractérisé en ce que** le frein de stationnement est déplacé par un actionneur (14) et la mesure de force (S22) se fait sur le dispositif de transmission de force (14).

7. Frein de stationnement électronique, qui peut être desserré par une commande de force et une commande de position,
**caractérisé en ce que,**
- lors du desserrage du frein de stationnement, celui-ci est d'abord déplaçable (S22) jusqu'à une première position prédéterminée (KEP-RPT) dans le sens de desserrage, dans le cadre d'une commande de position
- la première position (KEP-RPT) du frein de stationnement peut être déterminée en déterminant (S07), lors d'un serrage (S03) du frein de stationnement, dans le cadre d'une mesure de force, une position (KEP), dans laquelle se produit une force (FR), et, à partir de cette position (KEP), la première position (KEP-RPT) est déterminée comme une position (KEP-RPT) située plus loin dans le sens de desserrage, et,
- après avoir atteint la première position prédéterminée (KEP-RPT), une mesure de force (S22) peut être effectuée et, en fonction du résultat de cette mesure de force dans la première position (KEP-RPT), un autre déplacement (S25) du frein de stationnement peut se faire dans le sens de desserrage jusqu'à une seconde position.

8. Frein de stationnement électronique selon la revendication 7, **caractérisé en ce que** la première position (KEP-RPT) peut être prédéterminée pour chaque opération de serrage et/ou de desserrage (S03, S19) du frein de stationnement.

9. Frein de stationnement électronique selon la revendication 7 ou 8, **caractérisé en ce que** la première position (KEP-RPT) et/ou les positions (KEP, KAP) déterminées dans le cadre d'une mesure de force (S02, S04, S08) peut/peuvent être vérifiée(s) par un contrôle de vraisemblance.

10. Frein de stationnement électronique selon l'une quelconque des revendications 7 à 9, **caractérisé en ce que,**
- lors du desserrage (S25) du frein de stationnement, une mesure de force (S22) peut être effectuée après avoir atteint une quelconque position correspondant éventuellement à un état desserré du frein de stationnement, et,
- en fonction du résultat de la mesure de force, un autre déplacement (S22) du frein de stationnement peut se faire dans le sens de desserrage.

11. Frein de stationnement électronique selon l'une quelconque des revendications 7 à 10, **caractérisé en ce que,** lors du desserrage (S25) du frein de stationnement, il se produit un autre déplacement du frein de stationnement dans le sens de desserrage, si la mesure de force (S22) fournit un résultat différent de zéro.

12. Frein de stationnement électronique selon l'une quelconque des revendications 7 à 11, **caractérisé en ce que** le frein de stationnement présente un dispositif de transmission de force (14) et la mesure de force se fait sur le dispositif de transmission de force (14).

13. Frein de service ayant un dispositif selon l'une quelconque des revendications 7 à 12.

14. Véhicule automobile ayant un frein de stationnement électronique selon l'une quelconque des revendications 7 à 12.
